Europäisches Patentamt

European Patent Office

Office européen des brevets

(11) Numéro de publication : **0 607 094 A1**

## (12) DEMANDE DE BREVET EUROPEEN

(21) Numéro de dépôt : **94420002.1**

(22) Date de dépôt : **06.01.94**

(51) Int. Cl.$^5$ : **A01N 53/00, // (A01N53/00, 37:08)**

(30) Priorité : **12.01.93 FR 9300426**

(43) Date de publication de la demande :
**20.07.94 Bulletin 94/29**

(84) Etats contractants désignés :
**AT BE CH DE DK FR GB IE LI LU NL**

(71) Demandeur : **RHONE-POULENC AGROCHIMIE**
**14-20, rue Pierre Baizet**
**F-69009 Lyon (FR)**

(72) Inventeur : **Oudeyer, Jean-Claude**
**25 rue Jehan du Mas**
**F-69380 Chazay d'Azargues (FR)**
Inventeur : **Szoke, Tibor**
**La Tuile**
**F-69620 Chamelet (FR)**

(54) **Mélange régulateur de croissance des plantes.**

(57)  Compositions à effet régulateur de croissance caractérisées en ce qu'elles comprennent un mélange d'un acide 3,5-dioxo 4-(méthylène disubstitué) cyclohexane carboxylique ou l'ester, le sel ou l'amide correspondants (composé A), et d'un dérivé de l'acide cyclopropylmalonanilique (composé B) de formule (I) :

$$(R^1)_p C_6 H_{5-p} NR^2\text{-}CO\text{-}C(C_2 H_4)\text{-}CO\text{-}R^3\text{-}R^4$$

dans laquelle :

$R^1$ représente un atome d' halogène, ou un groupement alkyle, alkoxy, alkylthio, alkylsulfinyle, alkylsulfonyle, nitro, cyano, acétyle, ces divers radicaux étant éventuellement substitués par un ou plusieurs atomes d'halogène ;

$p$ est un nombre entier égal à 0, 1, 2 ou 3 ;

$R^2$ est un atome d'hydrogène ou un groupe alkyle inférieur ;

$R^3$ est un atome d'oxygène ou de soufre ;

$R^4$ est un atome d'hydrogène. ; ou un cation constitué par un groupe ammonium, alkylammonium, polyalkylammonium, hydroxyalkylammonium, poly(hydroxyalkyl)ammonium, ou un métal alcalin ou alcalino-terreux ; ou un radical alkyle, éventuellement substitué, notamment par des groupes hydroxy ou alkoxy.

EP 0 607 094 A1

Jouve, 18, rue Saint-Denis, 75001 PARIS

**EP 0 607 094 A1**

## I. DOMAINE TECHNIQUE DE L'INVENTION

### 1. Objet de l'invention :

La présente invention a pour objet des compositions à effet régulateur de croissance, et plus particulièrement des compositions utiles pour le traitement des céréales en vue d'augmenter la résistance à la verse et d'améliorer les rendements. L'invention concerne aussi un procédé de traitement des céréales ayant ce même but.

### 2. Etat de la technique antérieure :

Il est toujours souhaitable d'améliorer les productions agricoles, notamment des céréales, tant sur un plan quantitatif au niveau du rendement, que sur le plan qualitatif. Or ces céréales peuvent être affectées par des troubles nutritionnels, des attaques parasitaires, ou des dégâts d'ordre climatique provoqués par les orages ou le vent, qui se manifestent principalement par un aspect couché de la culture appelé la verse. Ainsi, la verse, surtout si elle intervient précocement, peut compromettre gravement le rendement ; même tardive, elle entraîne une mauvaise maturité du grain, des difficultés et des pertes de récolte, des risques de germination sur pied, etc. n est donc tout à fait désirable d'augmenter la résistance à la verse des céréales.

Cette résistance à la verse est liée à la hauteur de tige des céréales. Une céréale a d'autant plus de chance d'être couchée sous l'action éventuelle des phénomènes adverses précédemment mentionnés, renforcée par le poids du grain à l'extrémité de la tige, que la tige de cette céréale est plus haute. Il est donc tout à fait désirable de diminuer la longueur de tige des céréales.

Par ailleurs, la verse présente une gravité variable selon qu'elle survient avant ou après l'épiaison. L'épiaison est le stade de développement atteint par la céréale lorsque l'épi sort de la gaine de la dernière feuille. Lorsque la verse se produit avant l'épiaison, elle est souvent réversible ; et l'aspect couché de la culture peut disparaître et redevenir normal.

Il n'en est pas de même lorsque la verse survient après l'épiaison. Dans ce cas en effet la verse est généralement irréversible. Il est donc plus particulièrement important de prévenir la verse à ce stade de développement de la céréale. L'apparition de la verse à ce stade est tout particulièrement favorisée par la longueur de l'entre-noeud supérieur. L'entre-noeud supérieur est la partie de la tige située entre le noeud de la tige le plus élevé et la base de l'épi. Cet entre-noeud supérieur est normalement courbé sous le poids de l'épi qui lui est adjacent, et qui est donc porté à une certaine distance de l'axe constitué par le reste de la tige. Ainsi, par application de l'effet de levier, la céréale dans son ensemble a d'autant plus de chances d'être couchée, que l'entre-noeud supérieur est plus long, et amène le poids de l'épi à une distance plus grande de l'axe constitué par le reste de la tige. Il est donc également tout à fait désirable de diminuer la longueur de l'entre-noeud supérieur des céréales.

La demande internationale WO 87/05781 décrit des compositions à effet régulateur de croissance, notamment antiverse, comprenant des dérivés de l'acide malonanilique, celui-ci devant toutefois être obligatoirement associé à un agent induisant la formation d'éthylène dans la plante, notamment l'éthéphon.

La demande de brevet USP 4 618 360 décrit des dérivés de cyclohexanedione à groupe carboxylique possédant des propriétés d'herbicide et de régulateur de croissance, y compris une action antiverse dans certains cas. Il est connu, notamment par le compte-rendu de la Conférence sur la Protection des Plantes de Brighton de Novembre 1989, que ces dérivés ne font pas intervenir la formation d'éthylène dans la plante.

Aucun des éléments cités de l'état de la technique ne donne à connaître un quelconque effet particulier des produits ou compositions divulgués, sur l'entre-noeud supérieur des céréales.

Il est en outre toujours souhaitable de réduire les doses de produits chimiques épandus dans l'environnement, notamment en réduisant les doses d'application des produits, et d'élargir les possibilités de choix offertes à l'agriculteur, afin que celui-ci trouve la solution la mieux adaptée à son problème particulier.

## II. BUTS DE L'INVENTION

Un but de l'invention est donc de fournir une composition à effet régulateur de croissance utile pour les problèmes exposés ci-dessus.

Un autre but de l'invention est d'améliorer le rendement des cultures et plus spécialement des céréales.

Un autre but de l'invention est d'améliorer la résistance à la verse des céréales.

Un autre but de l'invention est de diminuer la longueur de tige des céréales.

Un autre but de l'invention est de diminuer la longueur de l'entre-noeud supérieur des céréales.

Un autre but de l'invention est de diminuer la quantité de produits agrochimiques répandus dans l'environnement.

Un autre but de l'invention est de permettre l'application de produits agrochimiques à dose réduite.

Il a maintenant été trouvé que ces buts pouvaient être atteints en totalité ou en partie grâce aux compositions selon l'invention.

## III. EXPOSE DETAILLE DE L'INVENTION

Les compositions à effet régulateur de croissance selon l'invention sont caractérisées en ce qu'elles comprennent un mélange d'un composé A qui est un acide 3,5-dioxo 4-(méthylène disubstitué) cyclohexane carboxylique ou l'ester, le sel ou l'amide correspondants et d'un composé B qui est un dérivé de l'acide cyclopropylmalonanilique répondant à la formule (I):

$$(R^1)_p C_6 H_{5-p}\text{-}NR^2\text{-}CO\text{-}C(C_2H_4)\text{-}CO\text{-}R^3\text{-}R^4$$

dans laquelle :

$R^1$ représente un atome d'halogène, ou un groupement alkyle, alkoxy, alkylthio, alkylsulfinyle, alkylsulfonyle, nitro, cyano, acétyle, ces divers radicaux étant éventuellement substitués par un ou plusieurs atomes d'halogène ;

$p$ est un nombre entier égal à 0, 1, 2 ou 3 ; lorsqu'il y a plusieurs radicaux $R^1$, ceux-ci peuvent être identiques ou différents entre eux ;

$R^2$ est un atome d'hydrogène ou un groupe alkyle inférieur ; le qualificatif inférieur désigne un groupement de 1 à 4 atomes de carbone ;

$R^3$ est un atome d'oxygène ou de soufre ;

$R^4$ est un atome d'hydrogène ; ou un cation constitué par un groupe ammonium, alkylammonium, polyalkylammonium, hydroxyalkylammonium, poly(hydroxyalkyl)ammonium, ou un métal alcalin ou alcalino-terreux ; ou un radical alkyle, éventuellement substitué, notamment par des groupes hydroxy ou alkoxy.

Selon un autre aspect de l'invention, les compositions selon l'invention comprennent un mélange du composé A et du composé B répondant à la formule (II) :

$$(R^1)_p C_6 H_{5-p}\text{-}NH\text{-}CO\text{-}C(C_2H_4)\text{-}CO\text{-}O\text{-}R^4$$

dans laquelle :

$R^1$ représente un atome d'halogène ;

$p$ est un nombre entier égal à 0, 1, 2 ou 3 ; lorsqu'il y a plusieurs radicaux $R^1$, ceux-ci peuvent être identiques ou différents entre eux ;

$R^4$ est un atome d'hydrogène ; ou un cation constitué par un groupe ammonium, alkylammonium, polyalkylammonium, hydroxyalkylammonium, poly(hydroxyalkyl)ammonium ou un métal alcalin ou alcalino-terreux ; ou un radical alkyle.

L'acide 3,5-dioxo 4-(méthylène disubstitué) cyclohexane carboxylique peut être substitué sur le groupe méthylène d'une part par un groupe hydroxyle ou hydroxylamine, et d'autre part par un groupe alkyle ou cycloalkyle ou haloalkyle ou alkoxyalkyle ou alkylthioalkyle. Il est décrit dans la demande de brevet européen 126713.

Selon une variante préférée de l'invention, les constituants des compositions selon l'invention sont :

- pour le composé A, le Cimectacarb, qui est l'ester éthylique de l'acide 4-(cyclopropyl hydroxymethylene) 3,5-dioxo cyclohexane carboxylique
- pour le composé B, l'acide 1-(N-(2,4-dichlorophényl) carbamoyl) cyclopropane carboxylique, de formule :

$$Cl_2 C_6 H_3\text{-}NH\text{-}CO\text{-}C(C_2H_4)\text{-}COOH$$

ou bien ses sels d'ammonium, d'alkylammonium, de polyalkylammonium, d'hydroxyalkylammonium, de poly(hydroxyalkyl)ammonium, ou de métal alcalin ou alcalino-terreux ; ou encore ses esters.

Le rapport pondéral composé A / composé B, dans les compositions selon l'invention, est généralement compris entre 0,1 et 20, de préférence entre 1 et 10.

Les compositions régulatrices de croissance selon l'invention contiennent habituellement 0,5 à 95 % de mélange du composé A et du composé B.

Il peut s'agir de la composition concentrée c'est-à-dire du produit commercial associant les deux matières actives. Il peut s'agir également de la composition diluée prête à être pulvérisée sur la culture à traiter. Dans ce dernier cas la dilution à l'eau peut être effectuée à partir d'une composition concentrée commerciale renfermant les deux matières actives (ce mélange est appelé " prêt à l'emploi " ou encore "ready mix ", en langue anglaise), soit sur le mélange extemporané (appelé en anglais " tank mix ") de deux compositions concentrées commerciales renfermant chacune une matière active.

Les compositions selon l'invention peuvent comprendre en outre tous les additifs ou adjuvants habituels des compositions phytosanitaires, notamment des supports, des tensioactifs, des agents d'adhérence et des agents de fluence.

Par le terme "support", dans le présent exposé, on désigne une matière organique ou minérale, naturelle ou synthétique, avec laquelle les matières actives sont associées pour faciliter son application sur la plante, sur des graines ou sur le sol. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau, alcools, cétones, fractions de pétrole, hydrocarbures aromatiques ou paraffiniques, hydrocarbures chlorés, gaz liquéfiés, etc...).

L'agent tensioactif peut être un agent émulsifiant, dispersant ou mouillant de type ionique ou non ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensioactif est désirable pour favoriser la dispersion des matières actives dans l'eau et leur bonne application sur les végétaux.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, des pigments, des colorants, des polymères.

Plus généralement, les compositions selon l'invention peuvent être associées à tous les additifs solides ou liquides correspondant aux techniques habituelles de la formulation des produits phytosanitaires.

Les compositions selon l'invention peuvent être sous forme solide, gélifiée, ou liquide, et dans ce dernier cas sous forme de solutions ou de suspensions ou d'émulsions ou de concentrés émulsionnables. Les compositions liquides sont préférées, tant en raison de leur commodité de mise en oeuvre qu'en raison de leur simplicité de fabrication.

Comme formes de compositions solides, on peut citer les poudres pour poudrage ou dispersion (à teneur en composés actifs pouvant aller jusqu'à 100 %), les poudres mouillables et les granulés pour épandage à sec ainsi que les granulés dispersables ou solubles.

Les poudres mouillables (ou poudres à pulvériser) de même que les granulés dispersables contiennent habituellement 20 à 95 % de matières actives, et en plus du support solide, de 0 à 5 % d'un agent mouillant, de 3 à 10 % d'un agent dispersant, et, quand c'est nécessaire, de 0 à 10 % d'un ou plusieurs stabilisants et/ou autres additifs, comme des pigments, des colorants, des agents de pénétration, des adhésifs, ou des agents antimottants, colorants, etc... Il est bien entendu que certaines de ces compositions, telles les poudres mouillables ou les granulés dispersables, sont destinées à constituer des compositions liquides lors de l'application.

Comme formes de compositions liquides, on peut citer les solutions, en particulier les concentrés solubles dans l'eau, les concentrés émulsionnables, les émulsions, les suspensions concentrées, les aérosols, les pâtes.

Les concentrés émulsionnables ou solubles comprennent le plus souvent 10 à 80 % de matières actives, les émulsions ou solutions prêtes à l'application contenant, quant à elles, 0,01 à 20 % de matières actives. En plus du solvant, les concentrés émulsionnables peuvent contenir quand c'est nécessaire, 2 à 20 % d'additifs appropriés comme les stabilisants, les agents tensio-actifs, les agents de pénétration, les inhibiteurs de corrosion, les colorants ou les adhésifs précédemment cités. A partir de ces concentrés, on peut obtenir par dilution avec de l'eau des émulsions de toute concentration désirée, qui conviennent particulièrement à l'application sur les parties aériennes de la plante à traiter. Comme cela a déjà été dit, les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

Les suspensions concentrées, également applicables en pulvérisation, sont un produit fluide stable, ne donnant pas lieu à un épaississement ou à la formation d'un sédiment après stockage, et elles contiennent habituellement de 10 à 75 % de matières actives, de 0,5 à 15 % d'agents tensioactifs, de 0,1 à 10 % d'agents thixotropes, de 0 à 10 % d'additifs appropriés, comme des pigments, des colorants, des anti-mousses, des inhibiteurs de corrosion, des stabilisants, des agents de pénétration et des adhésifs et, comme support, de l'eau ou un liquide organique dans lequel les matières actives sont peu ou pas solubles : certaines matières solides organiques ou des sels minéraux peuvent être dissous dans le support pour aider à empêcher la sédimentation ou comme antigels pour l'eau.

Les compositions selon l'invention sont préparées selon des procédés connus en soi.

Ainsi, pour obtenir les poudres à pulvériser ou poudres mouillables, on mélange intimement les matières actives dans des mélangeurs appropriés avec les substances additionnelles et on broie avec des moulins ou autres broyeurs. On obtient par là des poudres à pulvériser dont la mouillabilité et la mise en suspension sont avantageuses ; on peut les mettre en suspension avec de l'eau à toute concentration désirée et ces suspensions sont utilisables très avantageusement en particulier pour l'application sur les parties aériennes des végétaux.

A la place des poudres mouillables, on peut réaliser des pâtes ou suspensions concentrées. Les conditions et modalités de réalisation et d'utilisation de ces pâtes sont semblables à celles des poudres mouillables ou poudres à pulvériser, une partie de l'opération de broyage nécessaire étant simplement réalisée en milieu liquide.

Les granulés dispersables sont habituellement préparés par agglomération ou extrusion ou compactage, dans des systèmes de granulation appropriés, de compositions de type poudre mouillable. Les granulés pour épandage à sec sont habituellement obtenus par imprégnation d'un support granulé avec une solution ou une émulsion des matières actives.

Parmi ces compositions, l'homme de métier choisira avantageusement celle ou celles convenant selon les associations choisies.

Les compositions peuvent le plus souvent contenir les deux régulateurs de croissance définis ci-avant (association binaire) ou trois (association ternaire) ou même quatre (association quaternaire).

L'invention concerne également un procédé de traitement des cultures destiné à protéger ces cultures contre la verse et/ou à améliorer les rendements, caractérisé en ce que l'on applique sur les parties aériennes des végétaux une dose efficace et non phytotoxique d'une composition selon l'invention.

Ces compositions sont utilisées avantageusement de manière à ce que l'ensemble des composés A et B soit appliqué à une dose comprise entre 10 et 1000 g/ha et de préférence entre 25 et 500 g/ha. L'application se fait avantageusement sur les parties aériennes de la plante, pendant sa période de croissance.

Parmi les cultures auxquelles les compositions selon l'invention sont applicables, les céréales sont les principales cultures concernées, notamment le blé, l'orge, l'avoine, le seigle et leurs hybrides ; ainsi que le colza, le lin et le tournesol. Cependant toute autre culture sujette au phénomène de verse est aussi susceptible d'être traitée par le procédé selon l'invention et avec les compositions selon l'invention.

Le procédé peut être mis en oeuvre par utilisation d'une composition prête à l'emploi, ou par mélange extemporané juste avant l'emploi des différentes matières actives (tank mix). La composition peut également être formée directement sur la plante par applications successives des diverses matières actives.

IV. EXEMPLES :

Les exemples suivants donnés à titre non limitatif illustrent l'invention et montrent comment elle peut être mise en oeuvre.

Dans ces exemples, le composé A désigne le Cimectacarb, et le composé B, l'acide 1-(N-(2,4-dichlorophényl) carbamoyl) cyclopropane carboxylique, de formule :

$$Cl_2C_6H_3\text{-}NH\text{-}CO\text{-}C(C_2H_4)\text{-}COOH$$

**Exemple 1 :**

On a traité de l'orge d'hiver (variété Puffin), parvenu au stade 44 sur l'échelle de Zadoks. L'échelle de Zadoks ou échelle décimale est définie dans l'article de Zadoks, Chang et Konzak, publié, en 1974, sous le titre : "Decimal code for the growth stages of cereals" dans la revue Weed Research Vol. 14 pages 415-421.

On a relevé, 64 jours après le traitement, la hauteur moyenne des tiges, ainsi que la longueur moyenne de l'entre-noeud supérieur.

| Produit de traitement | Dose en g/ha | Hauteur moyenne des tiges (en cm) | Longueur moyenne de l'entre-noeud supérieur (en cm) |
|---|---|---|---|
| composé A | 100 | 71.22 | 27.90 |
| composé A+composé B | 100+20 | 67.93 | 25.00 |
| Témoin | 0 | 74.80 | 30.45 |

**Exemple 2 :**

On a traité de l'orge d'hiver (variété Baraka) au stade 45 sur l'échelle de Zadoks, ce qui correspond au stade de gonflement préalable à l'apparition de l'épi.
Les résultats ont été observés 51 jours après le traitement.
La verse a été exprimée en pourcentage de surface cultivée ayant donné lieu au phénomène de verse.

| Produit de traitement | Dose en g/ha | Verse en % |
|---|---|---|
| composé A | 100 | 31.3 |
| composé A+composé B | 100+30 | 17.5 |
| Témoin | 0 | 42.5 |

**Exemple 3 :**

On a traité du blé d'hiver (variété Beaver), parvenu au stade de croissance 37 sur l'échelle de Zadoks.
Lors du relevé des essais, effectué 74 jours après le traitement, aucun phénomène de verse n'a été observé.
En revanche les racourcissements de tige suivants ont été observés, indicatifs de la résistance à la verse.

| Produit de traitement | Dose en g/ha | Hauteur moyenne des tiges (en cm) |
|---|---|---|
| composé A | 60 | 50.38 |
| composé A+composé B | 60+20 | 46.95 |
| Témoin | 0 | 61.10 |

6

**Revendications**

1- Compositions à effet régulateur de croissance caractérisées en ce qu'elles comprennent un mélange d'un acide 3,5-dioxo 4-(méthylène disubstitué) cyclohexane carboxylique ou l'ester, le sel ou l'amide correspondants (composé A), et d'un dérivé de l'acide cyclopropylmalonanilique (composé B) de formule (I) :

$$(R^1)_pC_6H_{5-p}\text{-}NR^2\text{-}CO\text{-}C(C_2H_4)\text{-}CO\text{-}R^3\text{-}R^4$$

dans laquelle :

$R^1$ représente un atome d' halogène, ou un groupement alkyle, alkoxy, alkylthio, alkylsulfinyle, alkylsulfonyle, nitro, cyano, acétyle, ces divers radicaux étant éventuellement substitués par un ou plusieurs atomes d'halogène ;

p est un nombre entier égal à 0, 1, 2 ou 3 ;

$R^2$ est un atome d'hydrogène ou un groupe alkyle inférieur ;

$R^3$ est un atome d'oxygène ou de soufre ;

$R^4$ est un atome d'hydrogène ; ou un cation constitué par un groupe ammonium, alkylammonium, polyalkylammonium, hydroxyalkylammonium, poly(hydroxyalkyl)ammonium, ou un métal alcalin ou alcalino-terreux ; ou un radical alkyle, éventuellement substitué, notamment par des groupes hydroxy ou alkoxy

2- Compositions à effet régulateur de croissance selon la revendication 1 caractérisées en ce que le composé B répond à la formule (II) :

$$(R^1)_pC_6H_{5-p}\text{-}NH\text{-}CO\text{-}C(C_2H_4)\text{-}CO\text{-}O\text{-}R^4$$

dans laquelle :

$R^1$ représente un atome d'halogène ;

p est un nombre entier égal à 0, 1, 2 ou 3 ;

$R^4$ est un atome d'hydrogène ; ou un cation constitué par un groupe ammonium, alkylammonium, polyalkylammonium, hydroxyalkylammonium, poly(hydroxyalkyl)ammonium ou un métal alcalin ou alcalino-terreux ; ou un radical alkyle

3- Compositions à effet régulateur de croissance selon l'une des revendications 1 ou 2 caractérisées en ce que :

- le composé A est le Cimectacarb ;
- le composé B est l'acide 1-(N-(2,4-dichlorophényl) carbamoyl) cyclopropane carboxylique ; ou bien ses sels d'ammonium, d'alkylammonium, de polyalkylammonium, d'hydroxyalkylammonium, de poly(hydroxyalkyl)ammonium, ou de métal alcalin ou alcalino-terreux ; ou encore ses esters

4- Compositions à effet régulateur de croissance selon l'une des revendications 1 à 3 caractérisées en ce que le rapport pondéral composé A / composé B est compris entre 0,1 et 20, de préférence entre 1 et 10

5- Compositions à effet régulateur de croissance selon l'une des revendications 1 à 4 caractérisées en ce qu'elles contiennent 0,5 à 95 % de mélange du composé A et du composé B

6- Procédé de traitement des cultures destiné à les protéger contre la verse et/ou à améliorer les rendements, caractérisé en ce que l'on applique sur les parties aériennes des végétaux une dose efficace et non phytotoxique d'une composition selon l'une des revendications 1 à 5

7- Procédé selon la revendication 6, caractérisé en ce que l'ensemble des composés A et B est appliqué à une dose comprise entre 10 et 1000 g/ha, de préférence entre 25 et 500 g/ha

8- Procédé selon l'une des revendications 6 ou 7, caractérisé en ce que la culture est une céréale

9- Procédé selon l'une des revendications 6 ou 7, caractérisé en ce que la culture est choisie dans le groupe constitué par le blé, l'orge, l'avoine, le seigle et leurs hybrides, le colza, le lin et le tournesol

EP 0 607 094 A1

**Office européen des brevets**

## RAPPORT DE RECHERCHE EUROPEENNE

Numero de la demande
EP 94 42 0002

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| D,A | WO-A-87 05781 (RHONE-POULENC NEDERLANDS BV) | | A01N53/00 //(A01N53/00, 37:08) |
| A | EP-A-0 224 441 (CIBA-GEIGY AG) | | |
| D,A | EP-A-0 126 713 (CIBA-GEIGY AG) | | |

| | DOMAINES TECHNIQUES RECHERCHES (Int.Cl.5) |
|---|---|
| | A01N |

Le présent rapport a été établi pour toutes les revendications

| Lieu de la recherche | Date d'achèvement de la recherche | Examinateur |
|---|---|---|
| LA HAYE | 12 Avril 1994 | Donovan, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

8